# FASCICULE DE BREVET EUROPEEN

(11) **EP 3 642 115 B1**
(45) Date de publication et mention de la délivrance du brevet: **30.03.2022**
(21) Numéro de dépôt: 18748983.6
(22) Date de dépôt: 21.06.2018
(51) Int. Cl.: B64G 1/40, F17C 13/00

(54) **RÉSERVOIR AMÉLIORÉ POUR MOTEUR D'ENGIN SPATIAL**
VERBESSERTER TANK FÜR RAUMFAHRZEUGTRIEBWERK
IMPROVED TANK FOR A SPACECRAFT ENGINE

(30) Priorité: 22.06.2017 FR 1755704
(43) Date de publication de la demande: 29.04.2020
(73) Titulaire: ArianeGroup SAS, 78130 Les Mureaux (FR)
(72) Inventeur: VUILLAMY, Didier, 76230 Quincampoix (FR); ROZ, Gérard, 27510 Pressagny L'Orgueilleux (FR); EDELINE, Emmanuel, 27630 Ecos (FR)
(74) Mandataire: Cabinet Beau de Loménie
(86) Numéro de dépôt international: PCT/FR2018/051505
(87) Numéro de publication internationale: WO 2018/234705

(56) Documents cités:
- EP-A1- 0 434 509
- WO-A1-2016/158538
- WO-A2-2006/106204
- DE-B1- 2 249 081
- FR-A1- 2 635 499
- GB-A- 2 170 163
- US-A1- 2013 239 544

## Description

### DOMAINE DE L'INVENTION

Le présent exposé concerne le domaine des lanceurs à propulsion à liquides, et vise plus précisément un réservoir pour moteur fusée.

### ETAT DE LA TECHNIQUE ANTERIEURE

Les moteurs de lanceurs spatiaux consomment typiquement des ergols cryogéniques stockés dans des réservoirs dédiés. Ces réservoirs contiennent une phase liquide, c'est-à-dire l'ergol cryogénique, et une phase gazeuse dont le volume augmente au fur et à mesure de la consommation de l'ergol cryogénique. FR 2 635 499 A1 décrit un réservoir comprenant plusieurs volumes contenant d'ergol et des vannes entre eux.

Or, le gaz contenu dans les réservoirs des ergols cryogéniques est communément maintenu à une température supérieure à celle de l'ergol cryogénique, typiquement de l'ordre de 300 K alors que les ergols cryogéniques sont typiquement maintenus à une température de l'ordre de 90 K pour l'oxygène, 21 K pour l'hydrogène, 110 K pour le méthane, afin d'assurer une bonne compatibilité avec les pompes les acheminant vers les moteurs. Cette différence de température entre la phase gazeuse et la phase liquide au sein des réservoirs implique qu'au niveau de l'interface gaz/liquide, la température de l'ergol cryogénique augmente sensiblement, et s'élève de plusieurs degrés.

Il a été constaté que ces ergols échauffés ne permettent pas un fonctionnement correct des pompes assurant l'alimentation des moteurs, et provoquent un phénomène de cavitation. Afin d'éviter un tel phénomène, il est nécessaire d'augmenter sensiblement la pression au sein du réservoir de manière à ce que l'ergol soit acheminé vers la pompe à une pression plus élevée, ce qui entraine des contraintes additionnelles sur la structure du réservoir notamment en termes de masse, qui ne sont pas acceptables. La solution communément retenue est donc de ne pas consommer une partie de l'ergol présent dans chaque réservoir, correspondant sensiblement à la partie de l'ergol dont la température est plus élevée en raison de son contact avec le gaz présent dans le réservoir considéré. On comprend bien qu'une telle solution entraine donc une perte d'ergol pour la propulsion, et également une augmentation inutile de la masse du lanceur du fait de cet ergol non exploité.

### PRESENTATION DE L'INVENTION

Le présent exposé concerne ainsi un réservoir d'ergol cryogénique pour un moteur d'engin spatial, comprenant une enceinte externe définissant un volume interne,
caractérisé en ce que le volume interne du réservoir comprend un volume primaire et un volume secondaire relié au volume primaire via une vanne configurée pour sélectivement permettre un passage de fluide depuis le volume primaire vers le volume secondaire, ou pour isoler le volume secondaire du volume primaire,
le volume primaire présentant un orifice primaire adapté pour être relié à une première source de mise en pression,
le volume secondaire présentant un orifice d'alimentation adapté pour être relié à une ligne d'alimentation d'un moteur d'engin spatial, et un orifice secondaire adapté pour être relié à une seconde source de mise en pression.

Selon un exemple, le réservoir comprend en outre une paroi interne disposée au sein de l'enceinte externe, ladite paroi interne séparant le volume interne de l'enceinte externe de manière à définir le volume primaire et le volume secondaire.

L'enceinte externe et la paroi interne du réservoir auxiliaire sont alors typiquement réalisées en aluminium et assemblées par soudage, ou en matériau composite.

Selon un exemple, l'enceinte externe présente une trappe d'accès au volume interne, positionnée de manière à permettre à un utilisateur d'accéder à la vanne.

Le présent exposé concerne également un étage de lanceur d'engin spatial comprenant un moteur à ergols liquides relié à au moins un réservoir tel que défini précédemment, dans lequel le volume primaire et le volume secondaire sont disposés de manière à être superposés selon une direction longitudinale correspondant à une direction de déplacement du lanceur d'engin spatial, le volume primaire étant configuré de manière à être disposé au-dessus du volume secondaire par rapport à un sens de déplacement déterminé selon la direction longitudinale.

Selon un exemple, la première source de mise en pression est couplée à un contrôleur d'attitude, configuré pour piloter la mise en pression au sein du volume primaire et exploiter le gaz du volume primaire à des fins de contrôle d'attitude.

Selon un exemple, la seconde source de mise en pression est configurée de manière à sélectivement réaliser une mise en pression du volume secondaire afin d'acheminer l'ergol contenu dans le volume secondaire vers le moteur via la ligne d'alimentation du moteur.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1; représente schématiquement un réservoir 1 d'engin spatial pour ergol cryogénique selon un aspect de l'invention
- la figure 2 représente une variante du réservoir 1 présenté sur la figure 1.

Sur l'ensemble des figures, les éléments identiques sont repérés par des références numériques communes.

### DESCRIPTION DETAILLEE D'EXEMPLES DE REALISATION

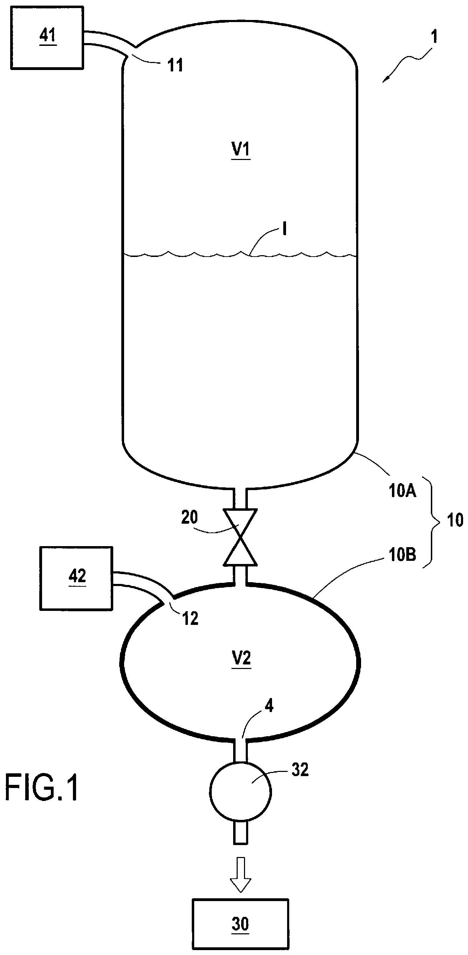

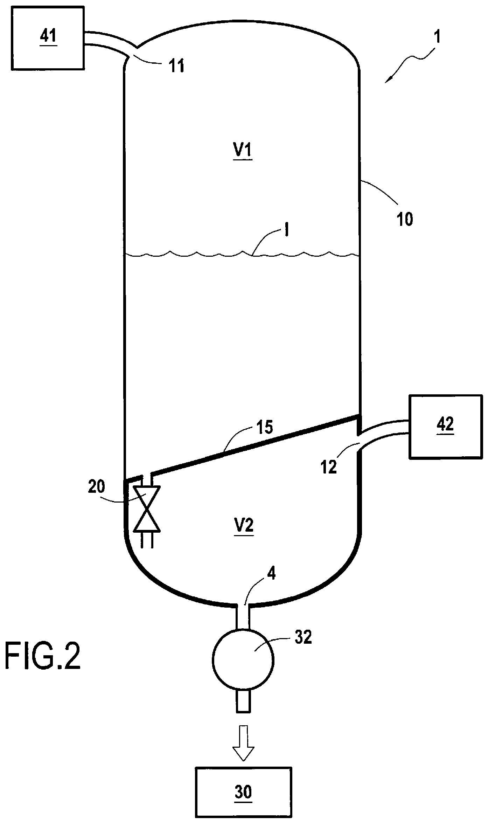

La figure 1 représente schématiquement un réservoir 1 d'engin spatial pour ergol cryogénique selon un aspect de l'invention. La figure 2 présente une variante du réservoir 1 présenté sur la figure 1.

Le réservoir 1 tel que présenté comprend une enceinte externe 10 définissant un volume interne du réservoir 1. Ce volume interne du réservoir 1 est divisé en deux volumes ; un volume primaire V1 et un volume secondaire V2.

Dans le mode de réalisation représenté sur la figure 1, l'enceinte externe 10 du réservoir 1 est en deux parties 10A et 10B qui définissent respectivement le volume primaire V1 et le volume secondaire V2. L'agencement relatif des deux parties 10A et 10B de l'enceinte externe 10 du réservoir 1 est indiqué à titre d'exemple ; plusieurs configurations peuvent être envisagées pour un montage de deux parties de réservoir en série.

Dans le mode de réalisation représenté sur la figure 2, une paroi interne 15 divise le volume interne défini par l'enceinte externe 10 en deux sous-volumes, définissant ainsi le volume primaire V1 et le volume secondaire V2.

Ces deux modes de réalisation présentent un fonctionnement similaire, que l'on décrit ci-après.

Le réservoir 1 est adapté pour contenir un ergol cryogénique destiné à alimenter un moteur d'engin spatial. Le volume primaire V1 est relié au volume secondaire V2 par l'intermédiaire d'une vanne 20, configurée de manière à sélectivement permettre un passage de fluide depuis le volume primaire V1 vers le volume secondaire V2, ou isoler ces deux volumes V1 et V2 l'un par rapport à l'autre. La vanne 20 est typiquement une vanne rotative à boisseau cylindrique, et est typiquement dimensionnée de manière à assurer une étanchéité pour un différentiel de pression de l'ordre de 3 bar à 50 bar.

Le réservoir 1 comprend un orifice d'alimentation 4 destiné à être relié à une ligne d'alimentation en ergol d'un moteur 30, typiquement via une pompe ou turbopompe 32. L'orifice d'alimentation débouche typiquement dans le volume secondaire V2 du réservoir 1. Le volume primaire V1 et le volume secondaire V2 sont chacun reliés à une source de mise en pression, pouvant être identiques ou distinctes. Le réservoir 1 présente ainsi un orifice primaire 11 débouchant dans le volume primaire V1, et un orifice secondaire 12 débouchant dans le volume secondaire V2, ces orifices étant reliés respectivement à une première source de pression 41 et une seconde source de pression 42. La première source de pression 41 et la seconde source de pression 42 peuvent par exemple être des accumulateurs, des pompes, ou tout autre moyen adapté pour réaliser une mise en pression d'une phase gazeuse d'un réservoir.

En fonctionnement, l'ergol cryogénique est initialement stocké dans le volume primaire V1 et dans le volume secondaire V2. Afin de réaliser une alimentation en ergol du moteur 30, la vanne 20 est ouverte de manière à permettre une circulation de l'ergol du volume primaire V1 vers le volume secondaire V2. L'ergol est prélevé dans le volume secondaire V2, et l'ergol présent dans le volume primaire V1 s'écoule dans le volume secondaire V2 pour le maintenir rempli. Un ciel gazeux se forme donc au sein du volume primaire V1 au fur et à mesure que l'ergol est consommé. La première source de pression 41 maintient une pression adaptée dans le ciel gazeux du volume primaire 41, typiquement de l'ordre de 4 à 5 bars, afin d'assurer un acheminement de l'ergol vers la pompe 32 et vers le moteur 30.

Une fois tout l'ergol présent dans le volume primaire V1 consommé, le volume primaire V1 est donc rempli de gaz. La vanne 20 est alors basculée en position fermée, de manière à isoler le volume primaire V1 du volume secondaire V2.

Le volume primaire V1 peut alors être utilisé par exemple dans le cadre du contrôle d'attitude. Il peut devenir une source de pression utilisable à la façon de la première source de pression 41 et être joint à cette dernière de manière à alimenter ensemble un contrôleur d'attitude, du lanceur associé.

Le volume secondaire V2 du réservoir 1 continue de réaliser l'alimentation du moteur 30 en ergol. On comprend qu'une partie de l'ergol cryogénique qui se situe au niveau de l'interface avec le gaz présent dans le réservoir 1 est à une température sensiblement supérieure, dans la mesure où le gaz présent dans le réservoir 1 est typiquement maintenu à une température de l'ordre de 300 K tandis que les ergols cryogéniques sont maintenus à une température typiquement de l'ordre de 90 K, 21 K ou 110 K selon l'ergol (respectivement pour l'oxygène, l'hydrogène ou le méthane). Ainsi, la température de l'ergol cryogénique au niveau de l'interface gaz/liquide augmente sensiblement, et augmente ainsi de quelques degrés. On désigne généralement cette partie de l'ergol comme « ergol thermique ». On représente arbitrairement sur les figures 1 et 2 l'interface gaz-liquide par une ligne I au sein du volume primaire V1 du réservoir 1.

Afin de permettre l'utilisation de cet ergol thermique, la seconde source de pression 42 est configurée de manière à sensiblement augmenter la pression au sein du volume secondaire V2 afin de permettre d'alimenter la pompe ou turbopompe 32 avec cet ergol thermique tout en prévenant l'apparition d'un phénomène de cavitation. A titre d'exemple, la pression du gaz au sein du volume secondaire V2 peut par exemple être augmentée de 3 à 4 bar jusqu'à 8 à 10 bar, ce qui permet d'éviter une cavitation de la pompe ou turbopompe 32 lorsqu'elle est alimentée en ergol ayant une température sensiblement plus élevée que la valeur nominale.

Cette montée en pression dans le volume secondaire V2 peut par exemple être déclenchée lorsque le volume d'ergol atteint un niveau prédéterminé au sein du volume secondaire V2, et/ou que la température de l'ergol en entrée de la pompe ou turbopompe 32 dépasse une valeur seuil de température. Le réservoir 1 peut ainsi être muni d'une sonde de niveau pour mesurer le niveau d'ergol au sein du volume secondaire V2, et l'orifice d'alimentation 4 peut être muni d'une sonde de température permettant de mesurer la température de l'ergol sortant du volume secondaire V2 du réservoir 1.

On comprend à la lecture de ce qui précède que la montée en pression afin de prévenir la cavitation de la pompe ou turbopompe 32 est réalisée uniquement dans le volume secondaire V2 du réservoir 1. Ainsi, le réservoir 1 tel que proposé permet d'exploiter tout l'ergol présent dans le réservoir 1 tout en minimisant l'impact structurel dû à la montée en pression nécessaire à cette exploitation de l'ergol thermique dans la mesure où une partie uniquement du réservoir 1, correspondant au volume secondaire V2, doit être réalisée de manière à supporter des pressions plus élevées. Le volume secondaire V2 est typiquement réduit par rapport au volume primaire V1, par exemple compris entre V1 / 5 et 4 x V1 / 5, ou encore entre V1 / 3 et 2 x V1 / 3.

Le réservoir est typiquement réalisé en aluminium ou en matériau composite. La paroi interne du réservoir est typiquement réalisée dans le même matériau que le réservoir, et donc le cas échéant en aluminium ou en matériau composite.

L'enceinte externe 10 du réservoir 1 présente typiquement une trappe d'accès au volume interne du réservoir 1, afin de permettre un accès à la vanne 20 et ainsi permettre son remplacement ou sa réparation si nécessaire. La vanne 20 est ainsi avantageusement disposée à proximité de l'enceinte externe 10 du réservoir 1 afin d'en faciliter l'accès.

Le réservoir 1 tel que présenté présente une application notamment pour un étage de lanceur d'engin spatial, afin de réaliser l'alimentation en ergol d'un moteur à propulsion liquide d'un tel lanceur.

En considérant la direction selon laquelle le lanceur est destiné à se déplacer, le volume primaire V1 et le volume secondaire V2 du réservoir 1 sont superposés selon cette direction, de manière à ce que le volume primaire V1 soit au-dessus du volume secondaire V2. Une telle disposition permet de faciliter l'écoulement de l'ergol liquide depuis le volume primaire V1 vers le volume secondaire V2.

## Revendications

1. Réservoir (1) d'ergol cryogénique pour un moteur d'engin spatial, comprenant une enceinte externe (10) définissant un volume interne, dans lequel le volume interne du réservoir comprend un volume primaire (V1) et un volume secondaire (V2) relié au volume primaire (V1) via une vanne (20) configurée pour sélectivement permettre un passage de fluide depuis le volume primaire (V1) vers le volume secondaire (V2), ou pour isoler le volume secondaire (V2) du volume primaire (V1), le volume secondaire (V2) présentant un orifice d'alimentation (4) adapté pour être relié à une ligne d'alimentation d'un moteur (30) d'engin spatial, et un orifice secondaire (12) adapté pour être relié à une seconde source de mise en pression (42), **caractérisé en ce que** le volume primaire (V1) présente un orifice primaire (11) adapté pour être relié à une première source de mise en pression (41).

2. Réservoir (1) selon la revendication 1, comprenant en outre une paroi interne (15) disposée au sein de l'enceinte externe (10), ladite paroi interne (15) séparant le volume interne de l'enceinte externe (10) de manière à définir le volume primaire (V1) et le volume secondaire (V2).

3. Réservoir (1) selon la revendication 2, dans lequel l'enceinte externe (10) et la paroi interne (15) du réservoir auxiliaire sont réalisées en aluminium et assemblées par soudage.

4. Réservoir (1) selon la revendication 2, dans lequel l'enceinte externe (10) et la paroi interne (15) du réservoir auxiliaire sont réalisées en matériau composite.

5. Réservoir (1) selon l'une des revendications 2 à 4, dans lequel l'enceinte externe (10) présente une trappe d'accès au volume interne, positionnée de manière à permettre à un utilisateur d'accéder à la vanne (20).

6. Etage de lanceur d'engin spatial comprenant un moteur (30) à ergols liquides relié à au moins un réservoir (1) selon l'une des revendications 1 à 5, dans lequel le volume primaire (V1) et le volume secondaire (V2) sont disposés de manière à être superposés selon une direction longitudinale correspondant à une direction de déplacement du lanceur d'engin spatial, le volume primaire (V1) étant configuré de manière à être disposé au-dessus du volume secondaire (V2) par rapport à un sens de déplacement déterminé selon la direction longitudinale.

7. Etage de lanceur d'engin spatial selon la revendication 6, dans lequel la première source de mise en pression (41) est couplée à un contrôleur d'attitude, configuré pour piloter la mise en pression au sein du volume primaire (V1) et exploiter le gaz du volume primaire (V1) à des fins de contrôle d'attitude.

8. Etage de lanceur d'engin spatial selon l'une des revendications 6 ou 7, dans lequel la seconde source de mise en pression (42) est configurée de manière à sélectivement réaliser une mise en pression du volume secondaire (V2) afin d'acheminer l'ergol contenu dans le volume secondaire (V2) vers le moteur (30) via la ligne d'alimentation du moteur (4).

## Patentansprüche

1. Tank (1) für kryogenen Treibstoff für ein Raumfahrzeugtriebwerk, umfassend ein Außengehäuse (10), das ein Innenvolumen definiert,
wobei das Innenvolumen des Tanks ein Primärvolumen (V1) und ein Sekundärvolumen (V2) umfasst, das mit dem Primärvolumen (V1) über ein Ventil (20) verbunden ist, das dazu ausgestaltet ist, selektiv einen Durchgang von Fluid von dem Primärvolumen (V1) zu dem Sekundärvolumen (V2) zu erlauben, oder das Sekundärvolumen (V2) vom Primärvolumen (V1) zu isolieren,
wobei das Sekundärvolumen (V2) eine Zuführöffnung (4), die angepasst ist, um mit einer Zuführleitung eines Raumfahrzeugtriebwerks (30) verbunden zu sein, und eine sekundäre Öffnung (12) aufweist, die angepasst ist, um mit einer zweiten Druckbeaufschlagungsquelle (42) verbunden zu sein, **dadurch gekennzeichnet, dass** das Primärvolumen (V1) eine primäre Öffnung (11) aufweist, die angepasst ist, um mit einer ersten Druckbeaufschlagungsquelle (41) verbunden zu sein.

2. Tank (1) nach Anspruch 1, ferner umfassend eine Innenwand (15), die innerhalb des Außengehäuses (10) angeordnet ist, wobei die Innenwand (15) das Innenvolumen des Außengehäuses (10) teilt, um das Primärvolumen (V1) und das Sekundärvolumen (V2) zu definieren.

3. Tank (1) nach Anspruch 2, wobei das Außengehäuse (10) und die Innenwand (15) des Reservetanks aus Aluminium hergestellt und durch Schweißen zusammengefügt werden.

4. Tank (1) nach Anspruch 2, wobei das Außengehäuse (10) und die Innenwand (15) des Reservetanks aus einem Verbundmaterial hergestellt werden.

5. Tank (1) nach einem der Ansprüche 2 bis 4, wobei das Außengehäuse (10) eine Zugangsklappe zu dem Innenvolumen aufweist, die so positioniert ist, dass sie einem Benutzer einen Zugriff auf das Ventil (20) ermöglicht.

6. Trägerraketenstufe eines Raumfahrzeugs, umfassend ein Triebwerk (30) mit Flüssigtreibstoff, das mit mindestens einem Tank (1) nach einem der Ansprüche 1 bis 5 verbunden ist, wobei das Primärvolumen (V1) und das Sekundärvolumen (V2) angeordnet sind, um entlang einer Längsrichtung, die einer Bewegungsrichtung der Trägerrakete des Raumfahrzeugs entspricht, übereinander zu liegen, wobei das Primärvolumen (V1) dazu ausgestaltet ist, gegenüber einer entlang der Längsrichtung bestimmten Bewegungsrichtung über dem Sekundärvolumen (V2) angeordnet zu sein.

7. Trägerraketenstufe eines Raumfahrzeugs nach Anspruch 6, wobei die erste Druckbeaufschlagungsquelle (41) an einen Lageregler gekoppelt ist, der dazu ausgestaltet ist, die Druckbeaufschlagung innerhalb des Primärvolumens (V1) zu steuern und das Gas des Primärvolumens (V1) zum Zwecke der Lageregelung zu nutzen.

8. Trägerraketenstufe eines Raumfahrzeugs nach einem der Ansprüche 6 oder 7, wobei die zweite Druckbeaufschlagungsquelle (42) dazu ausgestaltet ist, selektiv eine Druckbeaufschlagung des Sekundärvolumens (V2) umzusetzen, um den in dem Sekundärvolumen (V2) enthaltenen Treibstoff über die Zuführleitung (4) des Triebwerks zu dem Triebwerk (30) zu befördern.

## Claims

1. Cryogenic propellant tank (1) for spacecraft engine, comprising an outer enclosure (10) defining an inner volume,
wherein the inner volume of the tank comprises a primary volume (V1) and a secondary volume (V2) connected to the primary volume (V1) by a valve (20) configured to selectively allow the passing of fluid from the primary volume (V1) towards the secondary volume (V2), or to isolate the secondary volume (V2) from the primary volume (V1),
the secondary volume (V2) having a supply orifice (4) adapted to be connected to a supply line of a spacecraft engine (30), and a secondary orifice (12) adapted to be connected to a second pressurization source (42), **characterized in that** the primary volume (V1) comprises a primary orifice (11) adapted to be connected to a first pressurization source (41).

2. The tank according to claim 1, further comprising an inner wall (15) arranged inside the outer enclosure (10), said inner wall (15) separating the inner volume of the outer enclosure (10) so as to define the primary volume (V1) and the secondary volume (V2).

3. The tank (1) according to claim 2, wherein the outer enclosure (10) and the inner wall (15) of the auxiliary tank are made of aluminium and assembled by welding.

4. The tank (1) according to claim 2, wherein the outer enclosure (10) and the inner wall (15) of the auxiliary tank are made of composite material.

5. The tank (1) according to any of claims 2 to 4, wherein the outer enclosure (10) has a hatch to access the inner volume, positioned to enable a user to access the valve (20).

6. Stage of a spacecraft launch vehicle comprising a liquid propellant engine (30) connected to at least one tank (1) according to one of claims 1 to 5, wherein the primary volume (V1) and secondary volume (V2) are arranged so as to be superimposed in a longitudinal direction corresponding to a direction of travel of the spacecraft launch vehicle, the primary volume (V1) being configured so as to be arranged above the secondary volume (V2) in relation to a determined direction of travel in the longitudinal direction.

7. The stage of a spacecraft launch vehicle according to claim 6, wherein the first pressurization source (41) is coupled to an attitude controller, configured to control pressurization within the primary volume (V1) and to make use of the gas in the primary volume (V1) for attitude control.

8. The stage of a spacecraft launch vehicle according to one of claims 6 or 7, wherein the second pressurization source (42) is configured so as to selectively pressurize the secondary volume (V2) for conveying of the propellant contained in the secondary volume (V2) towards the engine (30) through the engine supply line (4).
